# EUROPEAN PATENT APPLICATION

(11) **EP 1 186 489 A2**
(43) Date of publication of application: **13.03.2002**
(21) Application number: 01307191.5
(22) Date of filing: 23.08.2001
(51) Int. Cl.: B60R 25/00

(54) **In-vehicle security system**

(30) Priority: 08.09.2000 US 657407
(71) Applicant: Johnson Controls Technology Company, Plymouth, Michigan 48170 (US)
(72) Inventor: Suman, Michael J., Holland, Michigan 49424 (US)
(74) Representative: Dealtry, Brian

(57) **Abstract**

A vehicle having an anti-theft system, a door assembly, a controller and a remote keyless entry fob. The anti-theft system is selectively operable in an armed condition for electrically disconnecting a vehicle battery and grounding a vehicle electrical system to ground in response to a detected unauthorized vehicle start-up and an unarmed condition. The door assembly has a latch mechanism and a latch lock device. The latch lock device is selectively operable in an unlocked condition and a locked condition, wherein the locked condition prevents the latch mechanism from being positioned in the unlatched condition. The controller is coupled to the latch lock device and the anti-theft system. The remote keyless fob is operable for selectively transmitting a lock or unlock signals to the controller. Transmission of the lock signal to the controller causes the controller to generate a first latch lock control signal and a first anti-theft control signal. The first latch lock control signal causes locking of the latch lock. The first anti-theft system control signal causes the anti-theft system to generate a first actuation signal employed to arm the anti-theft system. Transmission of the unlock signal to the controller causes the controller to generate a second latch lock control signal and a second anti-theft system control signal. The second latch lock control signal causes unlocking of the latch lock. The second anti-theft system control signal causes the anti-theft system to generate a second actuation signal employed to disarm the anti-theft system.

## Description

### BACKGROUND OF THE INVENTION

The present invention relates generally to vehicle security systems and more particularly to a device and method for actuating a vehicle security system.

A vehicle anti-theft system is disclosed in U.S. Patent No. 5,977,654 entitled "Anti-Theft System for Disabling a Vehicle Engine that Includes a Multi Contact Switch for Disconnecting the Battery and Loading the Vehicle Electrical System". This anti-theft system disables a vehicle engine upon the detection of an unauthorized vehicle startup, after the engine is running, by disconnecting the vehicle battery and draining the vehicle electrical system voltage to ground through a resistor. A separate fob transmitter transmits a coded frequency signal that is received by a receiver associated with the anti-theft system. If the system is armed, the signal will cause the system to become disarmed so that the engine can be freely started. If the system is disarmed, the signal will cause the system to become armed.

Although the aforementioned anti-theft system provides novel, versatile vehicle theft protection, it remains desirable to provide additional improvements in the accessibility and ease of operation. For example, the above-mentioned anti-theft system requires a separate fob transmitter to arm and disarm the system. Accordingly, if one desires to activate the anti-theft system, the fob transmitter must be in the possession of the vehicle user, in addition to any existing remote key entry actuators that are used to control a latch lock device. This arrangement is relatively cumbersome and may create problems, for example, if the vehicle user is not in possession of the fob transmitter when the activation or deactivation of the anti-theft system is desired.

Accordingly, there remains a need in the art for an apparatus and method for controlling a latch lock device and an anti-theft system which can be performed remotely without a plurality of fob transmitters.

### SUMMARY OF THE INVENTION

In one preferred form, the present invention provides a vehicle having an anti-theft system, a door assembly, a controller and a remote keyless entry fob. The anti-theft system is selectively operable in an armed condition for electrically disconnecting a vehicle battery and grounding a vehicle electrical system to ground in response to a detected unauthorized vehicle start-up and an unarmed condition. The door assembly has a latch mechanism and a latch lock device. The latch mechanism is operable in a latched condition for engaging a striker and an unlatched condition for releasing the striker. The latch lock device is selectively operable in an unlocked condition and a locked condition, wherein the locked condition prevents the latch mechanism from being positioned in the unlatched condition. The controller is coupled to the latch lock device and the anti-theft system. The remote keyless fob is operable for selectively transmitting a lock signal to the controller and for selectively transmitting an unlock signal to the controller. Transmission of the lock signal to the controller causes the controller to generate a first latch lock control signal and a first anti-theft control signal. The first latch lock control signal causes the latch lock device to be positioned in the locked condition. The first anti-theft system control signal causes the anti-theft system to generate a first actuation signal which is employed to place the anti-theft system in the armed condition. Transmission of the unlock signal to the controller causes the controller to generate a second latch lock control signal and a second anti-theft system control signal. The second latch lock control signal causes the latch lock device to be positioned in the unlocked condition. The second anti-theft system control signal causes the anti-theft system to generate a second actuation signal which is employed to place the anti-theft system in the unarmed condition. Methods for securing a vehicle against theft and unsecuring a vehicle that has been secured against theft are also provided.

### BRIEF DESCRIPTION OF THE DRAWINGS

The various advantages of the present invention will become apparent to one skilled in the art by reading the following specification and subjoined claims and by referencing the following drawing in which:
FIGURE 1 is a schematic illustration of a vehicle constructed in accordance with the teachings of the present invention;
FIGURE 2 is a side elevational view of a portion of the vehicle of Figure 1 illustrating the latch mechanism;
FIGURE 3 is a schematic illustration of a portion of the vehicle of Figure 1 illustrating the anti-theft system; and
FIGURE 4 is an enlarged portion of the vehicle of Figure 1 illustrating the controller and anti-theft system.

### DETAILED DESCRIPTION OF THE PREFERRED EMBODIMENT

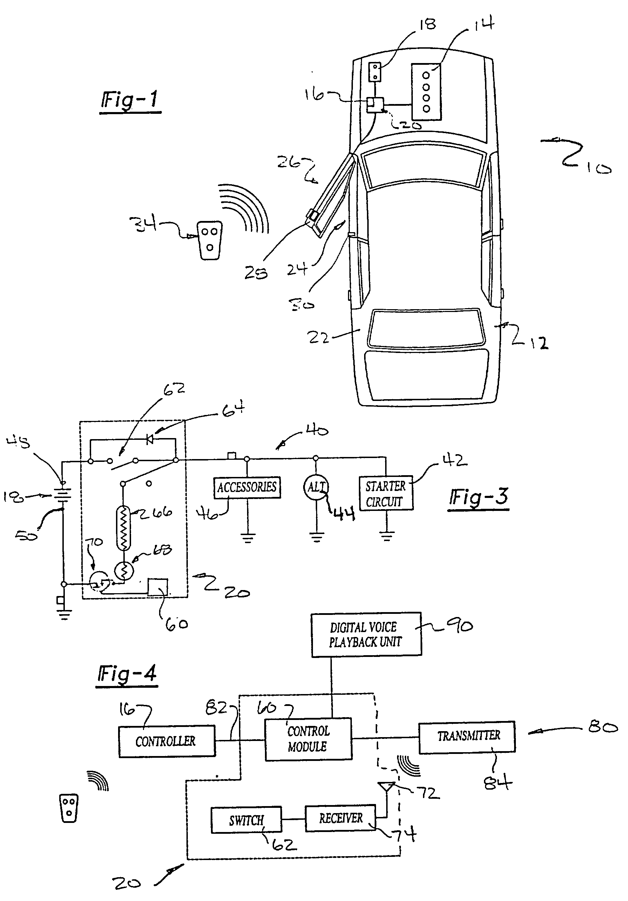

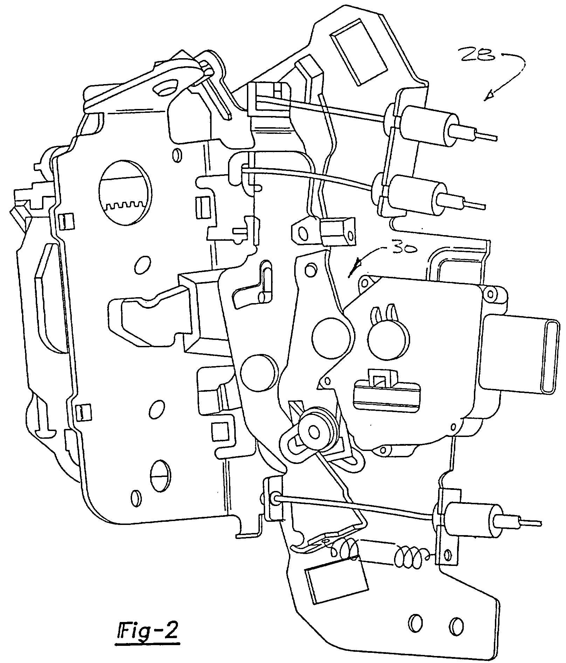

With reference to Figures 1 and 2 of the drawings, an illustrative vehicle constructed in accordance with the teachings of the present invention is generally indicated by reference numeral 10. Vehicle 10 is illustrated to include a vehicle body 12, an engine 14, a controller 16, a battery 18 and an anti-theft system 20. Vehicle body 12 conventionally includes a body structure 22 that defines at least one door aperture 24. A vehicle door assembly 26 is pivotably coupled to body structure 22 via a hinge mechanism (not shown) and is movable between an open position wherein vehicle door assembly 26 substantially clears door aperture 24 and a closed position wherein vehicle door assembly 26 substantially closes door aperture 24. Vehicle door assembly 26 conventionally includes a latch mechanism 28 that is operable in a latched condition for engaging a striker 30 that is coupled to body structure 22 and an unlatched condition for releasing striker 30. When latch mechanism 28 is in the latched condition and engaged to striker 30, latch mechanism 28 and striker 30 cooperate to secure door assembly 26 against body structure 22 so that door assembly 26 remains in the closed position.

Latch mechanism 28 conventionally includes a latch lock device 30 which is operable in an unlocked condition and a locked condition. Placement of latch lock device 30 in the unlocked condition permits latch mechanism 28 to disengage and release striker 30 to thereby permit door assembly 26 to pivot from the closed position toward the open position. Placement of latch lock device 30 in the locked condition inhibits latch mechanism 28 from releasing striker 30. Latch lock device 30 may be manually operated from the interior or the exterior of vehicle 12 to permit latch mechanism 28 to release striker 30 so that door assembly 26 may be moved from the closed position toward the open position. Latch lock device 30 may also be remotely operated via a remote keyless entry fob 34. Remote keyless entry fob 34 is operable for selectively generating a lock signal and an unlock signal, both of which may be radio frequency (RF) signals, which are transmitted to controller 16.

In Figure 3, an illustrative anti-theft system 20 is schematically illustrated in association with a vehicle electrical circuit 40 having a battery 18, a starter circuit 42, an alternator 44 and electrical accessories 46. The battery 18 includes a positive battery terminal post 48 that is connected to a positive battery cable (not shown) and a negative battery terminal post 50 that is connected to a negative battery cable (not shown). Each of the starter circuit 42, the alternator 44 and the electrical accessories 46 is connected in parallel with the battery 18. The starter circuit 42 typically includes an ignition switch (not shown) and a starting motor (not shown) which operate to turn a flywheel (not shown) under power from the battery 18 when the ignition switch is closed to start the vehicle engine 14. The alternator 44 provides electrical power to the various vehicle electrical systems once the vehicle engine 14 is operating, and recharges the battery 18. The vehicle electrical accessories 46 can be any other electrical device or system in vehicle 10, including headlights, a dome light, a radio, a horn, a clock, etc. The operation of starter circuit 42, the alternator 44, and the electrical accessories 46 are well known in the art.

A detailed discussion of anti-theft system 20 is beyond the scope of this disclosure and need not be provided herein. Briefly, anti-theft system 20 includes a control portion 60, a normally closed switch 62, a diode 64, a dissipation resistor 66, a positive temperature coefficient device 68 and a solid state transistor switch 70. In operation, vehicle 10 is started by the starter circuit 42 when the ignition switch is closed by powering the starter motor to rotate the flywheel. When the vehicle engine 14 starts, the alternator 44 is energized to keep the engine 14 running and the flywheel rotating. If the anti-theft system 20 is in an unarmed condition, the anti-theft system 20 does not effect the operation of engine 14. If the anti-theft system 20 is in an armed condition, the anti-theft system 20 assumes that the engine start-up is unauthorized, and possibly a theft is occurring, so the control portion 60 causes the switch 62 to open the normally closed switch 62 to disconnect the battery 18 from the vehicle electrical circuit 40. Additionally, control portion 60 causes the solid state transistor switch 70 to close and electrically connect the resistor 66 to ground through the negative battery terminal post 50 in a manner that prevents engine operation, even after being jump started by a second battery. Control portion 60 is operable for receiving an actuation signal for selectively arming and disarming anti-theft system 20. Control portion 60 may receive the actuation signal in the form of a discreet or encoded electrical signal. Preferably, control portion 60 receives a radio frequency (RF) signal that is received by an antenna 72 and deciphered by a receiver 74 to determine if the actuation signal is valid. When receiver 74 receives a valid coded signal, it outputs a signal to arm or disarm the anti-theft system 20. For example, if anti-theft system 20 is currently armed, receipt of the valid coded actuation signal will cause control portion 60 to disarm anti-theft system 20. Anti-theft system 20 is described in more detail in U.S. Patent No. 5,977,654 entitled "Anti-Theft System for Disabling a Vehicle Engine that Includes a Multi Contact Switch for Disconnecting the Battery and Loading the Vehicle Electrical System", the disclosure of which is hereby incorporated by reference as if fully set forth herein.

To maximize the convenience of vehicle 10 and to reduce the proliferation of fobs that are necessary for vehicle user to operate vehicle 10, vehicle 10 is equipped with a radio frequency (RF) system 80 that is coupled to controller 16, preferably via a data bus 82 as illustrated in Figure 4. RF system 80 includes a trainable transmitter 84 which is preferably mounted in vehicle 10 and may be positioned within a vehicle map lamp, an overhead console, a visor or another vehicle accessory. A detailed discussion of transmitter 84 is beyond the scope of this disclosure and need not be provided herein. Briefly, transmitter 84 includes a radio frequency circuit (not specifically shown) and a micro-controller (not specifically shown) which are operable for selectively generating a predetermined output radio frequency signal. Transmitter 84 is trained to generate a first actuation signal for causing anti-theft system 20 to be placed in an armed condition and a second actuation signal for causing anti-theft system 20 to be placed in an unarmed condition. RF system 80 and transmitter 84 are described in more detail in U.S. Patent Nos. 4,241,870 entitled "Remote Transmitter and Housing"; 5,793,300 entitled "Trainable RF Receiver for Remotely Controlling Household Appliances"; and 5,903,226 entitled "Trainable RF System for Remotely Controlling Household Appliances", the disclosures of which are hereby incorporated by reference as if fully set forth herein.

In operation, assuming anti-theft system 20 to be armed and latch lock device 30 to be in the locked condition, a vehicle user actuates remote keyless entry fob 34 to generate an unlock signal. The unlock signal is received by controller 16 which in response thereto generates a first latch lock control signal and a first anti-theft system control signal. The first latch lock control signal is operable for causing latch lock device 30 to be positioned in the unlocked condition. The first anti-theft system control signal is preferably transmitted over data bus 82 to RF system 80. Upon receipt of the first anti-theft system control signal, transmitter 84 is actuated to generate a first actuation signal to cause anti-theft system 20 to be in the unarmed condition. Similarly, if latch lock device 30 is in an unlocked condition, anti-theft system 20 is in an unarmed condition and remote keyless entry fob 34 is actuated to generate a lock signal, controller 16, upon receipt of the lock signal, generates a second latch lock control signal for causing latch lock device to be positioned in the locked condition. Controller 16 also generates a second anti-theft system control signal to arm anti-theft system 20. Preferably, the second anti-theft system control signal is not simply operable for changing the state of anti-theft system 20 (e.g., from the armed condition to the unarmed condition and vice versa), but rather is distinct from the first anti-theft control signal. Configuration in this manner is advantageous in that it avoids a situation wherein the condition of latch lock device 30 is out of phase with the condition of anti-theft system 20 (e.g., latch lock device 30 is in the locked condition and anti-theft system 20 is in the unarmed condition), as when remote keyless entry fob 34 is operated repetitively to lock or unlock vehicle door assembly 26.

Those skilled in the art will understand that configuration of anti-theft system 20 in this manner renders it possible to generate an unique audio signal, such as a chirp or double chirp, to designate that latch lock device 30 and anti-theft system 20 are unlocked and unarmed, respectively, or locked and armed, respectively. Vehicle 10 may also be equipped with a digital voice playback unit 90 so that audio signal additionally or alternatively includes a verbal message, such as "anti-theft system armed". One suitable digital voice playback unit 90 is disclosed in U.S. Patent No. 5,810,420 entitled "Memo Visor", the disclosure of which is hereby incorporated by reference as if fully set forth herein.

While the invention has been described in the specification and illustrated in the drawings with reference to a preferred embodiment, it will be understood by those skilled in the art that various changes may be made and equivalents may be substituted for elements thereof without departing from the scope of the invention as defined in the claims. In addition, many modifications may be made to adapt a particular situation or material to the teachings of the invention without departing from the essential scope thereof. Therefore, it is intended that the invention not be limited to the particular embodiment illustrated by the drawings and described in the specification as the best mode presently contemplated for carrying out this invention, but that the invention will include any embodiments falling within the foregoing description and the appended claims.

## Claims

1. A method for selectively securing a vehicle against theft, the vehicle having a latch lock device, a controller and an anti-theft system, the latch lock device being selectively operable in an unlocked condition and a locked condition, the locked condition preventing a closure member latch mechanism from being unlatched, the anti-theft system being selectively operable in an unarmed condition and an armed condition, the armed condition being operable for electrically disconnecting a vehicle battery and grounding a vehicle electrical system to ground in response to a detected unauthorized vehicle start-up, the method comprising the steps of:
transmitting a lock signal to the controller;
generating a latch control signal and an anti-theft system control signal in response to the lock signal, the latch control signal causing the latch lock device to be positioned in the locked condition; and
generating an actuation signal in response to the anti-theft system control signal, the actuation signal causing the anti-theft system to be placed in the armed condition.

2. The method of Claim 1, wherein the actuation signal is generated by a programmable transmitter coupled to the vehicle.

3. The method of Claim 2, wherein before the step of transmitting the lock signal to the controller the method includes the step of training the programmable transmitter to generate the actuation signal.

4. The method of Claim 1, wherein the lock signal is generated by a remote keyless entry fob.

5. The method of Claim 1, further comprising the step of:
generating an audio signal indicative that the anti-theft system is in the armed condition.

6. The method of Claim 5, wherein the step of generating the audio signal includes the step of generating a verbal message.

7. The method of Claim 1, wherein the anti-theft system control signal is transmitted to the anti-theft system via a data bus.

8. A method for selectively unsecuring a vehicle that has been secured against theft, the vehicle having a latch lock device, a controller and an anti-theft system, the latch lock device being selectively operable in an unlocked condition and a locked condition, the locked condition preventing a closure member latch mechanism from being unlatched, the anti-theft system being selectively operable in an unarmed condition and an armed condition, the armed condition being operable for electrically disconnecting a vehicle battery and grounding a vehicle electrical system to ground in response to a detected unauthorized vehicle start-up, the method comprising the steps of:
transmitting an unlock signal to the controller;
generating a latch control signal and an anti-theft system control signal in response to the lock signal, the latch control signal causing the latch lock device to be positioned in the unlocked condition; and
generating an actuation signal in response to the anti-theft system control signal, the actuation signal causing the anti-theft system to be in the unarmed condition.

9. The method of Claim 8, wherein the actuation signal is generated by a programmable transmitter coupled to the vehicle.

10. The method of Claim 9, wherein before the step of transmitting the lock signal to the controller the method includes the step of training the programmable transmitter to generate the actuation signal.

11. The method of Claim 8, wherein the unlock signal is generated by a remote keyless entry fob.

12. The method of Claim 8, further comprising the step of:
generating an audio signal indicative that the anti-theft system is in the unarmed condition.

13. The method of Claim 8, wherein the step of generating the audio signal includes the step of generating a verbal message.

14. The method of Claim 8, wherein the anti-theft system control signal is transmitted to the anti-theft system via a data bus.

15. A vehicle comprising:
an anti-theft system being selectively operable in an unarmed condition and an armed condition, the armed condition being operable for electrically disconnecting a vehicle battery and grounding a vehicle electrical system to ground in response to a detected unauthorized vehicle start-up;
a door assembly having a latch mechanism and a latch lock device, the latch mechanism operable in a latched condition for engaging a striker and an unlatched condition for releasing the striker, the latch lock device being selectively operable in an unlocked condition and a locked condition, the locked condition preventing the latch mechanism from being positioned in the unlatched condition;
a controller coupled to the latch lock device and the anti-theft system;
a remote keyless fob operable for selectively transmitting a lock signal to the controller and for selectively transmitting an unlock signal to the controller;
wherein transmission of the lock signal to the controller causes the controller to generate a first latch control signal and a first anti-theft system control signal, the first latch control signal causing the latch lock device to be positioned in the locked condition and the first anti-theft system control signal causing the anti-theft system to generate a first actuation signal, the first actuation signal causing the anti-theft system to be in the armed condition; and
wherein transmission of the unlock signal to the controller causes the controller to generate a second latch control signal and a second anti-theft system control signal, the second latch control signal causing the latch lock device to be positioned in the unlocked condition and the second anti-theft system control signal causing the anti-theft system to generate a second actuation signal, the second actuation signal causing the anti-theft system to be in the unarmed condition.

16. The vehicle of Claim 15, further comprising a transmitter for generating the first and second actuation signals.

17. The vehicle of Claim 16, wherein the transmitter is programmable.

18. The vehicle of Claim 15, wherein the lock signal and the unlock signals are radio frequency signals.

19. The vehicle of Claim 15, further comprising an audio device for generating an audio signal indicative of whether the anti-theft system is in the armed condition or the unarmed condition.

20. The vehicle of Claim 19, wherein the audio signal includes a verbal message.
